# EUROPEAN PATENT APPLICATION

(11) **EP 2 129 003 A1**
(43) Date of publication of application: **02.12.2009**
(21) Application number: 07710840.5
(22) Date of filing: 25.01.2007
(51) Int. Cl.: H04B 7/005

(54) **POWER CONTROL APPARATUS AND METHOD**

(71) Applicant: ZTE Corporation, Shenzhen, Guangdong 518057 (CN)
(72) Inventor: ZENG, Wenqi, Guangdong 518057 (CN)
(74) Representative: Ilgart, Jean-Christophe
(86) International application number: PCT/CN2007/000278
(87) International publication number: WO 2008/092299

(57) **Abstract**

A power control apparatus and method. The apparatus for power control comprises the following modules: a power measuring module (102) for estimating interference power of a physical channel by using symbols of a common pilot channel and for measuring signal power of the physical channel by using pilot symbols and data symbols of Dedicated Physical Control Channel symbols; a Signal to Interference Ratio (SIR) comparing module (104) for shifting the signal power and modifying a preset target SIR by using the interference power to obtain a threshold for comparison and comparing the threshold with the shifted signal power; and a transmission power control command generating module (106) for generating a command for power control based on the comparison result to control the power of the physical channel.

## Description

### Filed of the Invention

The present invention relates to communication field , in particular to a power control apparatus and method.

### Background of the Invention

In Wideband CDMA (Wideband Code Division Multiple Access, WCDMA for short) mobile communication system, all mobile users in a cell occupy a same frequency band and different users are distinguished by different spreading codes. Due to the unideal correlation properties of different spreading codes, interference may exist between different users. Especially, the interference brought about to the user with lower power by the user with stronger power is larger than that brought about to the user with stronger power by the user with lower power, which is so called near far effect. To reduce the near far effect and eliminate the influence brought about by fast fading of wireless links and further to maximize the total capacity of wireless communication system, a power control apparatus must be adopted in WCDMA mobile communication system.

In the standards on WCDMA of the 3rd Generation mobile communication, the object of downlink power control lies in strengthening the performance of UE receiver in the condition of fast fading or that User Equipment (UE for short) belongs to cell border. The downlink power control method is a power control method, in which the Signal to Interference Ratio (SIR for short) measured in the inner loop power control is held over the target SIR given by the outer loop power control by changing the transmit power of signals on the basis of guaranteed service quality. In the conventional power control methods, when measuring SIR, channel estimation, channel compensation and RAKE combining are first performed mainly according to pilot symbols in Dedicated Physical Control Channel (DPCH for short), and then SIR value of signals is estimated according to these received symbols. As in DPCH data symbols are mainly sent and pilot symbols in each time slot are very limited, there often exists deviation in SIR value estimated on the basis of these limited pilot symbols, which fails to optimize downlink power control. Insiders always pay attention to power control in WCDMA system and have brought forward a few improvements.

In the Chinese patent Nr.01136718.0 entitled "Method and Apparatus for measuring SIR of Downlink (forward) Links in WCDMA System", there provides a method for estimating SIR before RAKE combining, wherein SIR is measured respectively for each wireless link and then SIR of each branch is combined to obtain the total estimated SIR value. Relative to conventional methods, this method avoids error caused by channel estimation after RAKE combining and helps to increase the precision of SIR estimation. However, as this method only adopts pilot symbols of DPCH for estimation, the precision of this estimating method will be significantly reduced when pilot symbols in time slot format are few. On the other hand, in this method SIR needs to be measured for each wireless link, which makes realization more complex for the system.

In the method provided in the Chinese patent Nr. 01100364.2 entitled "Method for Measuring Signal to Interference Ratio (SIR)", channel estimating value is obtained according to the common pilot symbols and channel compensation is performed to the discrete pilot symbols of DPCH, and then SIR is measured according to the pilot symbols. In this method, the precision of SIR estimation is improved by improving channel estimation, however, there is the same defect with the Chinese patent Nr. 01136718.0, i.e. too small pilot symbols applied in measuring SIR.

In the U.S. patent Nr.6028894 with the title "SIR or SNR Measurement Apparatus", there provides a universal method for estimating SIR, wherein phase rotation is performed to all input symbols to make them be located in the first quadrant, coherent power estimation is performed to these rotated symbols to obtain signal power and at the same time, incoherent power of the input symbols is calculated, and then the difference between the incoherent power and signal power is calculated to be taken as the estimation of interference power. The advantage of this method lies in that contents of the received symbols do not need to be known beforehand and according to need any amount of symbols can be choosed to have SIR measuring . However, there are also defects in this method, i.e. the rotation of input symbols is a kind of hard-decision method and errors may be brought about by wrong decision. As the coherent power estimation is completed based on symbol rotation that may bring about errors, the result is also not accurate. Additionally, the apparatus in this patent performs smoothing filter processing to both signal power estimation and interference power, which leads to that the result of measuring SIR can not reflect the current SIR condition of physical channel in time and therefore may affect the effect of power control.

In view of the above conditions, the present invention provides a new apparatus and method for power control to solve the problem that SIR estimation is not accurate enough in the condition of a small amount of pilot symbols.

### Summary of the invention

The object of the present invention is to provide a new apparatus for power control to solve the problem that SIR estimation is not accurate enough in the condition of a small amount of pilot symbols to control the power of physical channel better.

According to one aspect of the present invention, there provides an apparatus for power control, comprising the following modules: a power measuring module for estimating interference power of a physical channel by using symbols of a common pilot channel and for measuring signal power of the physical channel by using pilot symbols and data symbols of Dedicated Physical Control Channel symbols; a Signal to Interference Ratio (SIR) comparing module for shifting the signal power and modifying a preset target SIR by using the interference power to obtain a threshold for comparison and comparing the threshold with the shifted signal power; and a transmission power control command generating module for generating a command for power control based on the comparison result to control the power of the physical channel.

According to another aspect of the present invention, there provides a method for power control, comprising the following steps: Step 1002, symbols of a common pilot channel are used to estimate interference power of a physical channel and pilot symbols and data symbols of Dedicated Physical Control Channel symbols are used to measure signal power of the physical channel; Step 1004, the signal power is shifted and a preset target SIR is modified by using the interference power to obtain a threshold for comparison and the threshold is compared with the shifted signal power; and Step 1006, a command for power control is generated based on the comparison result to control the power of the physical channel.

The present invention makes full use of symbols of Common Pilot Channel (CPICH) and symbols of Dedicated Physical Control Channel (DPCH) received by downlinks. Compared with the estimation by only a small amount of pilot symbols in the present technologies, the interference power estimated by successive CPICH symbols in a time slot and by actualizing a certain compensation is more accurate. Likewise, the estimation to signal power in combination with data symbols and pilot symbols is also exacter than that only according to several discrete pilot symbols in DPCH. With the present invention, the precision of estimating SIR can be improved, which helps to maximize the system capacity. Moreover, the present invention takes the efficiency of hardware realization into account, wherein estimation of coherent power and estimation of incoherent power are combined with an error eliminating module by engineering methods, which facilitates hardware realization relative to technologies with hard decision of data symbols and will not cause errors because of wrong hard decision. Meanwhile, simple operation is carried out and the hardware resources can also be saved by present invention.

Other characteristics and advantages of the present invention will be described in the following specification, and will be apparent partly from the specification and embodiments of the present invention. The objects and other advantages can be realized and obtained through the structure of the specification, claims, and the drawings.

### Brief Description of the Drawings

The drawings in the specification provide a further understanding to the present invention and constitute a part of the application. The exemplary embodiments of the present invention and the explanation thereof are given thereafter by way of illustration only, and thus are not limitative of the present invention, and wherein:
Figures 1A to IF are block diagrams of the apparatus for power control and components thereof according to the present invention;
Figure 2 is a structure diagram of the time slot of CPICH and DPCH in a downlink of WCDMA system;
Figure 3 is a structure block diagram of an embodiment of the apparatus for power control according to the present invention;
Figure 4 is a structure diagram of the power measuring module according to the embodiment of the present invention;
Figure 5 is a structure diagram of the interference power estimating module according to the embodiment of the present invention;
Figure 6 is a structure block diagram of the smoothing filter according to the embodiment of the present invention;
Figure 7 is a reference block diagram of carrying out the error eliminator in the power measuring module according to the embodiment of the present invention;
Figure 8 is a structure block diagram of the SIR decision module according to the embodiment of the present invention;
Figure 9 is a process block diagram of carrying out the SIR decision module according to the embodiment of the present invention; and
Figures 10A to 10D are work flow chart of the method for power control and steps thereof according to the present invention.

### Detailed Description

The embodiments of the present invention will be illustrated in combination with the accompanying drawings in details as follows.

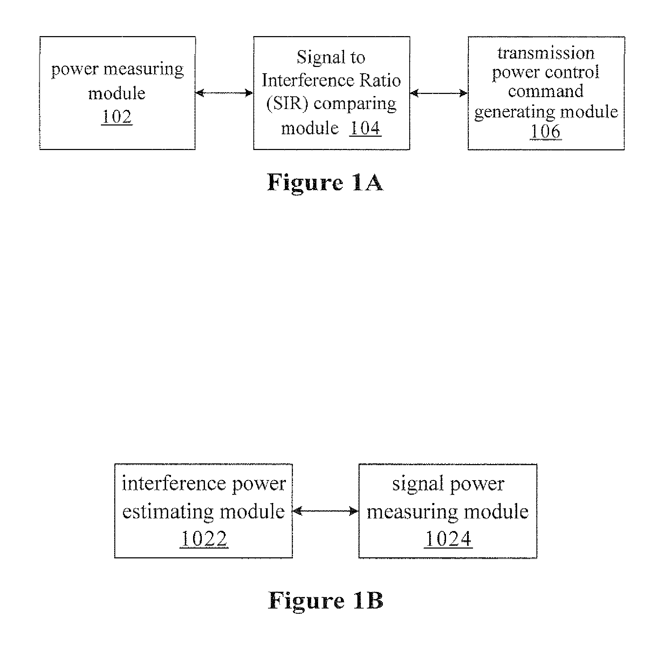

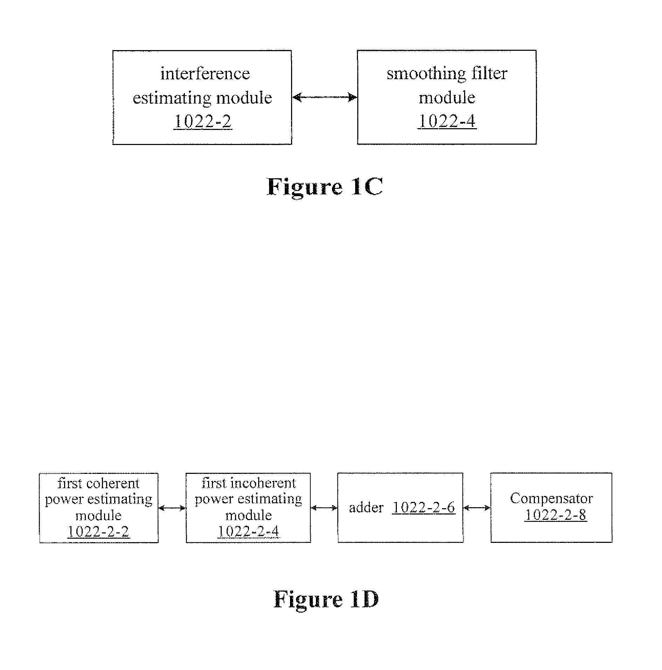

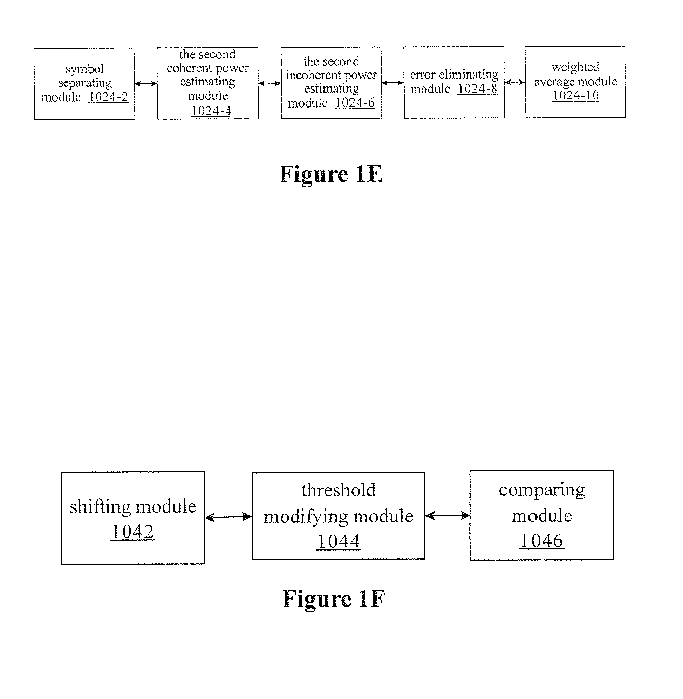

The apparatus for power control according to the present invention will be illustrated in combination with figures 1A to IF. As shown in the figures, the apparatus for power control according to the present invention comprises the following modules: a power measuring module 102 for estimating interference power of a physical channel by using symbols of a common pilot channel and for measuring signal power of the physical channel by using pilot symbols and data symbols of Dedicated Physical Control Channel symbols; a Signal to Interference Ratio (SIR) comparing module 104 for shifting the signal power and modifying a preset target SIR by using the interference power to obtain a threshold for comparison and comparing the threshold with the shifted signal power; and a transmission power control command generating module 106 for generating a command for power control based on the comparison result to control the power of the physical channel.

Wherein, the power measuring module 102 comprises an interference power estimating module 1022 for estimating an average interference power in a predetermined time period by using symbols of the common pilot channel and performing compensation and smoothing to the average interference power to obtain the interference power; and a signal power measuring module 1024 for calculating a first estimated power value by the using pilot symbols and a second estimated power value by using the data symbols, the average interference power and power offset between the pilot symbols and the data symbols , and measuring the signal power by using the first estimated power value and the second estimated power value.

Wherein, the interference power estimating module 1022 comprises the following modules: an interference estimating module 1022-2 for calculating an average interference power in a predetermined time period by using symbols of the common pilot channel , and performing power compensation to the average interference power to compensate the influence on the average interference power made by the difference between the spreading factors of symbols of the common pilot channel and those of the data symbols; and a smoothing filter module 1022-4 for performing smoothing processing to the average interference power after power compensation to obtain the interference power.

Wherein, the interference estimating module 1022-2 comprises the following modules: a first coherent power estimating module 1022-2-2 for calculating coherent power of symbols of the common pilot channel; a first incoherent power estimating module 1022-2-4 for calculating incoherent power of symbols of the common pilot channel; an adder 1022-2-6 for calculating the difference between the coherent power and the incoherent power of symbols of the common pilot channel to obtain the average interference power; and a compensator 1022-2-8 for compensating the influence on the average interference power made by the difference between the spreading factors of symbols of the common pilot channel and those of the data symbols.

Wherein, the algorithm of the first coherent power module is different from that of the first incoherent power module.

Wherein, the signal power measuring module 1024 comprises the following modules: a symbol separating module 1024-2 for separating the pilot symbols and the data symbols from the Dedicated Physical Control Channel symbols , and inputting the pilot symbols into a second coherent power estimating module and the data symbols into a second incoherent power estimating module; the second coherent power estimating module 1024-4 for calculating coherent power of the pilot symbols, i.e. the first estimated power value; the second incoherent power estimating module 1024-6 for calculating incoherent power of the data symbols; an error eliminating module 1024-8 for calculating the second estimated power value according to the incoherent power, the average interference power and the power offset between the pilot symbols and the data symbols; and a weighted average module 1024-10 for calculating the signal power according to the first estimated power value and the second estimated power value.

Wherein, the algorithm of the second coherent power estimating module is the same with that of the first coherent power estimating module, and the second incoherent power estimating module is the same with that of the first incoherent power estimating module.

Wherein, the Signal to Interference Ratio (SIR) comparing module 104 comprises a shifting module 1042 for shifting the signal power; a threshold modifying module 1044 for modifying the preset target SIR by using the interference power to obtain a threshold for comparison; and a comparing module 1046 for comparing the threshold with the shifted signal power.

Wherein, the target SIR is integral power of 2.

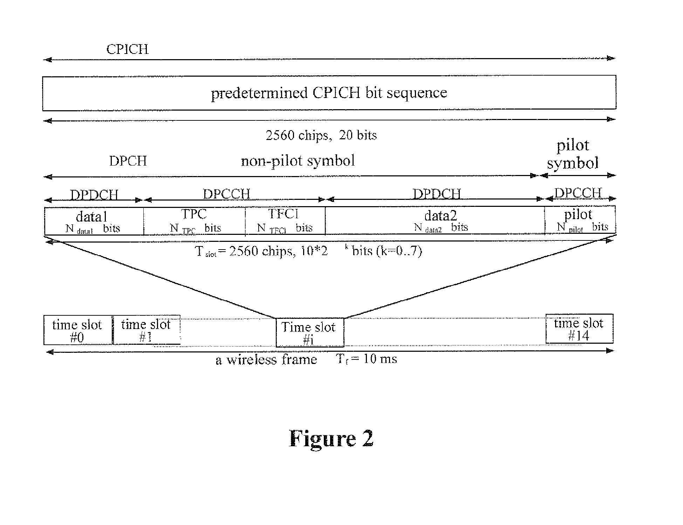

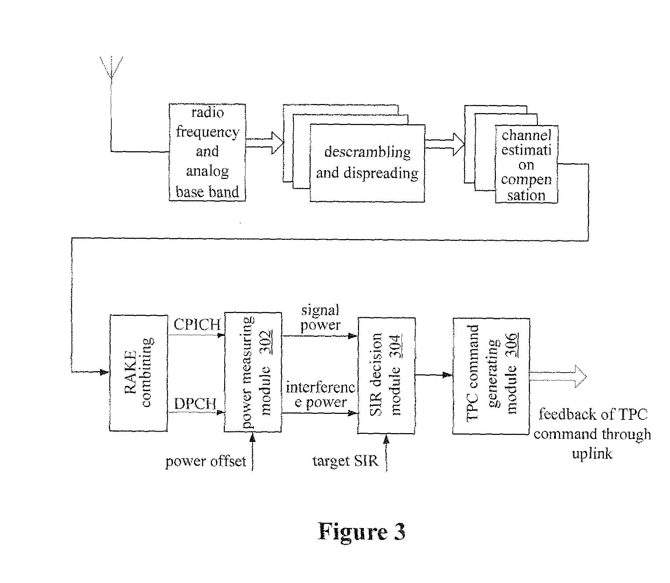

The embodiment of the apparatus for power control according to the present invention will be illustrated in combination with figure 3. In the apparatus for power control according to the present invention, SIR is measured by making use of Dedicated Physical Control Channel and Common Pilot Channel as well. The time slot formats of DPCH and CPICH are as shown in figure 2. As shown in figure 3, in a downlink of WCDMA, signals received by antenna are transformed into digital base band signals by processing of radio frequency and analog base band. Descrambling and dispreading are respectively performed to the digital base band signals according to each wireless path and then estimation and compensation of channel are performed. The symbols which have been estimated and compensated by estimation and compensation of channel are conducted the RAKE combining to become symbols of CPICH and DPCH necessary for power control.

The power measuring module 302 completes estimation to signal power and interference power according to the input DPCH symbols, CPICH symbols and power offset parameters. The SIR decision module 304 judges whether the measured SIR is larger than the target SIR according to the input signal power , interference power and the target SIR obtained by outer loop power control. The TPC command generating module 306 generates a TPC command necessary for power control according to the decided SIR result and the TPC command is fed back to the base station side through an uplink to complete power control.

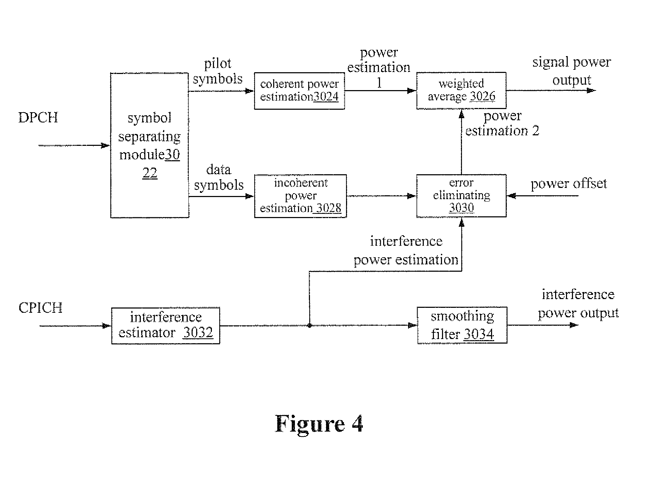

The power measuring module of the apparatus for power control according to the present invention is illustrated in combination with figure 4. As shown in figure 4, the power measuring module 302 comprises the following modules: a symbol separating module 3022, a coherent power estimating module 3024, a weighted average module 3026, an incoherent power estimating module 3028, an error eliminating module 3030, an interference estimating module 3032 and a smoothing filter 3034.

The CPICH symbols input into the power measuring module first enters the interference estimating module to calculate the average interference power at that time slot. As the spreading factors (SF) of the CPICH symbols and DPCH data symbols are different, the interference estimating module needs to compensate the influence on interference power estimation due to different SF. The interference power can be output after Interference power estimation pass through the smoothing filter.

The other input DPCH symbol of the power measuring module first enters the symbol separating module to separate pilot symbols and data symbols. The pilot symbols enter the coherent power estimating module to calculate an estimated power value of physical channel signals, which is called power estimation 1 here. The data symbols obtained through the symbol separating module enter the incoherent power estimating module and the obtained result is sent as input to the error eliminating module. The error eliminating module makes calculation and obtains the other estimated power value, which is called power estimation 2 here according to the result of incoherent power estimation of the data symbols, interference power estimation without smoothing filter output by the interference estimating module and the power offset between the pilot symbols and data symbols of DPCH. The power estimation 1 and power estimation 2 are both sent to the weighted average module to obtain the final signal power output by calculation. The interference power and signal power output by the power measuring module are both sent to the SIR decision module for further processing.

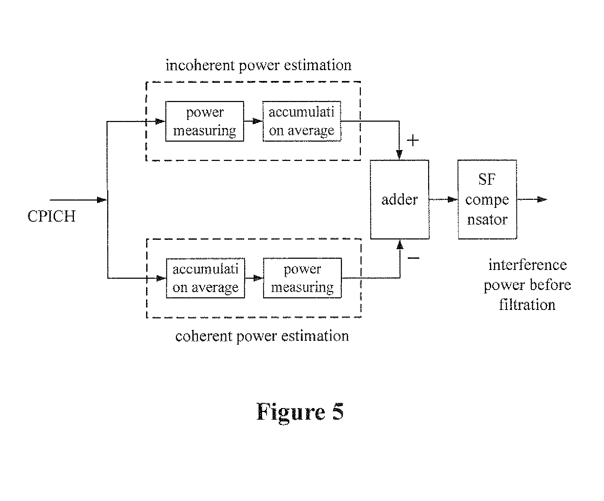

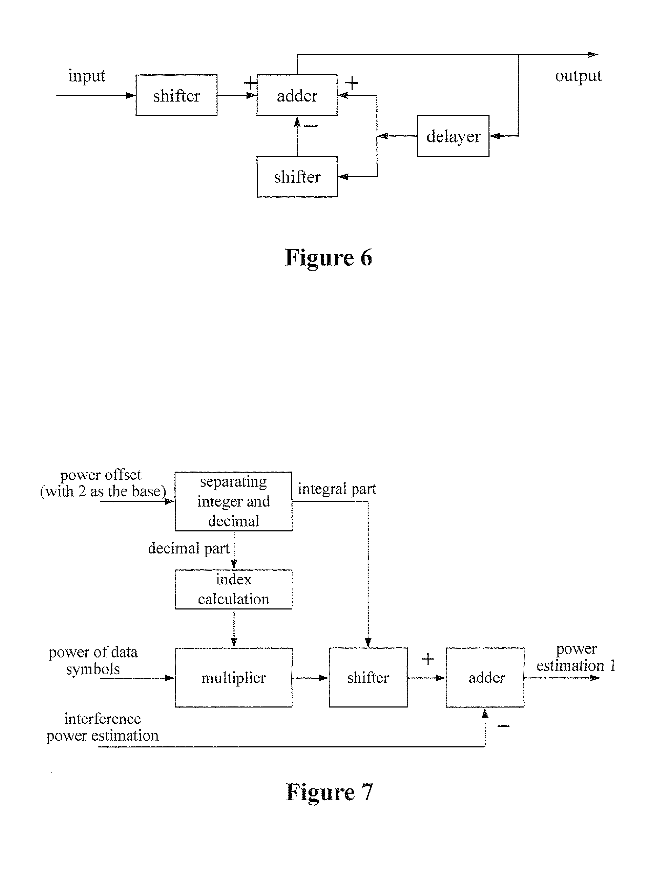

Wherein, the process of interference power estimation is illustrated in details as follows: the input CPICH symbols of the power measuring module first enter the interference estimating module to calculate the average interference power of CPICH symbols in that time slot. As shown in figure 5, the output CPICH symbols are divided into two branches, wherein incoherent power estimation is performed to one branch and coherent power estimation to the other. In the incoherent power estimation, the power of symbols is first calculated, which is followed by accumulation and averaging operation of the power. To simplify hardware realization, the number of symbols in accumulating calculation can be integral power of 2, while the averaging operation can be carried out by shifting. Different from the incoherent power estimation, in the coherent power estimation, accumulating and averaging operations need to be first performed to the input symbols, and the power of the average result is then calculated. The incoherent power estimation and coherent power estimation enter the adder and the difference between the two calculated by the adder is the interference power of the CPICH symbols before filtration. Due to different spreading factors between the CPICH symbols and DPCH data symbols, the interference power of the CPICH symbols can not be applied directly and must be compensated by SF compensator. As the spreading factor of CPICH is constant to be 256, the compensator needs to be multiplied by SF/256, relative to DPCH whose spreading factor is SF. As SF is integral power of 2, the operation of SF compensator can be carried out by simple shifting, for example, if SF=128, the input power value needs to make one digit shift to the right by SF compensator . Considering the stability of interference power in a certain period of time, to further reduce fluctuation, the interference power output by the interference estimating module can only obtain the interference power output through the smoothing filter. The smoothing filter can be carried out by first-order IIR filtering. To simplify hardware, 1/4, 1/8 and 1/6 etc. can be selected as the coefficient of first-order IIR filtering and the smoothing filter can be carried out only by units such as adder and shifter. As shown in figure 6, if two shifters are configured for 4-digit shift to the right, first-order IIR filtering with a coefficient of 1/16 can be carried out by the hardware shown in figure 6.

Wherein, the process of measuring signal power is illustrated as follows: the DPCH symbols of the power measuring module first enter the symbol separating module, which can separate pilot symbols and data symbols according to the time slot format of the current downlink. The pilot symbols calculate an estimated power value of channels, which is power estimation 1 in figure 4 via the coherent power estimating power. The algorithm of the coherent power estimating module of the DPCH pilot symbols will not be repeated here as being the same with that of the CPICH coherent power estimating module in figure 5. The data symbols enter the incoherent power estimating module and obtain the incoherent power estimation of the data symbols. The algorithm of the incoherent power estimating module will also not be repeated here as being the same with that of the CPICH incoherent power estimating module in figure 5. The result of the incoherent power estimation of the data symbols is sent to the error eliminating module. In view of the power offset between the pilot symbols and data symbols in DPCH channels, as shown in figure 7, the error eliminating module does not only to eliminate the influence of interference power in the result of the incoherent power estimation but should also take the influence of power offset into account. To simplify hardware design, a logarithm parameter with 2 as the base is taken as the input power offset. The input signal power first compensates the influence of power offset. As shown in figure 7, for the power offset parameter, after integral part and decimal fraction are separated from each other, the integral part is sent to the shifter by shifting, while the decimal fraction is sent to an index calculating module, where the index is obtained by lookup and then sent to a multiplier. The power value of the data symbols finally completes compensation to power offset after multiplication and shifting, and then obtains the output signal power, which is power estimation 2 in figure 4 by subtracting the interference power. Both the signal power estimation 1 and power estimation 2 are sent to the weighted average module to calculate the final signal power output. The weights of the two power estimations can be selected according to experience. Generally, when there are relatively more pilot symbols in the time slot format of downlink DPCH, the weight of the power estimation 1 can be added, and contrarily, when there are fewer pilot symbols, the weight value of the power estimation 2 needs to be added while that of the power estimation 1 reduced. At last, the output interference power and output signal power by the power measuring module are both sent to the SIR decision module for further processing.

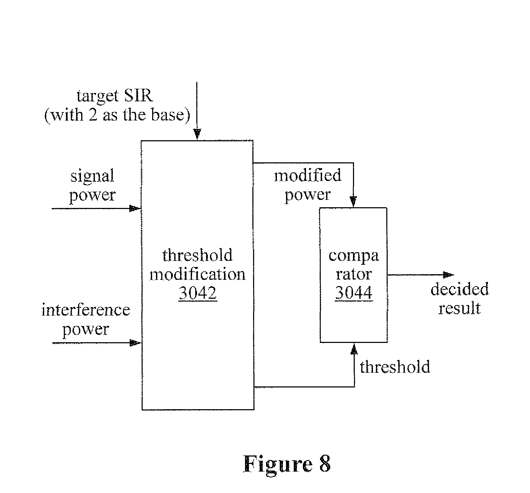

The SIR decision module of the apparatus for power control according to the present invention will be illustrated in combination with figure 8. As shown in figure 8, the SIR decision module 304 comprises a threshold modifying module 3042 and a comparator 3044. To facilitate hardware processing, when configuring target SIR parameters to the SIR decision module, the target SIR parameter can be preset to be a parameter with 2 as the base. To avoid complex division and logarithm operation, the SIR decision module needs to modify the input interference power according to the target SIR parameter to generate a new decision threshold, while the input signal power should be shifted according to the integral part of the target SIR. The power value and threshold value output by the threshold modifying module are sent to the comparator. The result of comparison between the signal power value modified by the threshold modifying module and the threshold value is equivalent to the result of comparison between the measured SIR and target SIR. At last, the output of the comparator is that of the SIR decision module.

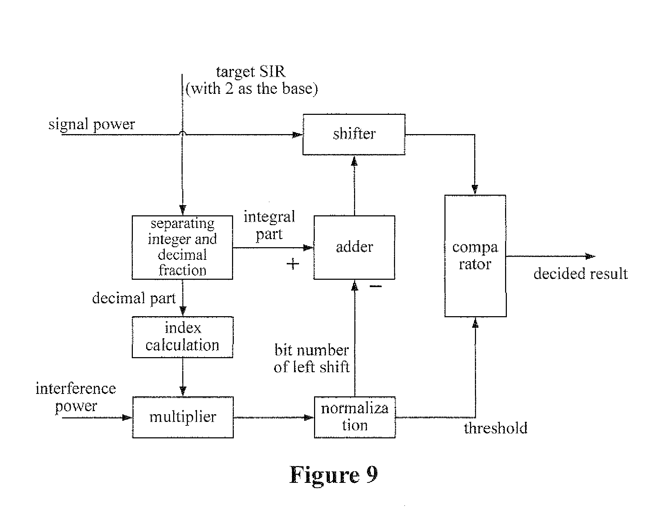

The process of carrying out the SIR decision module is illustrated in combination with figure 9. As shown in figure 9, for the target SIR, the integral and decimal parts of the target SIR are first obtained by a module for separating integer and decimal fraction. The decimal part of the target SIR enters the index calculating module, through which the result calculated by lookup is sent to the multiplier. The result is then multiplied with the input interference power by the multiplier and the obtained product result is then sent to a normalizing module, through which a normalized result is calculated and sent to the comparator as a threshold. Meanwhile, the normalizing module calculates the bit number of left shift necessary for completing normalization operation and sends the bit number of left shift to the adder, through which the bit number is subtracted from the integral part separated from the target SIR and the obtained result is then sent to the shifter as the digit number that the signal power needs to be shifted to the right. The shifter shifts the input signal power and sends the obtained result to the comparator for comparison with the threshold. The output of the comparator is the output of the SIR decision module.

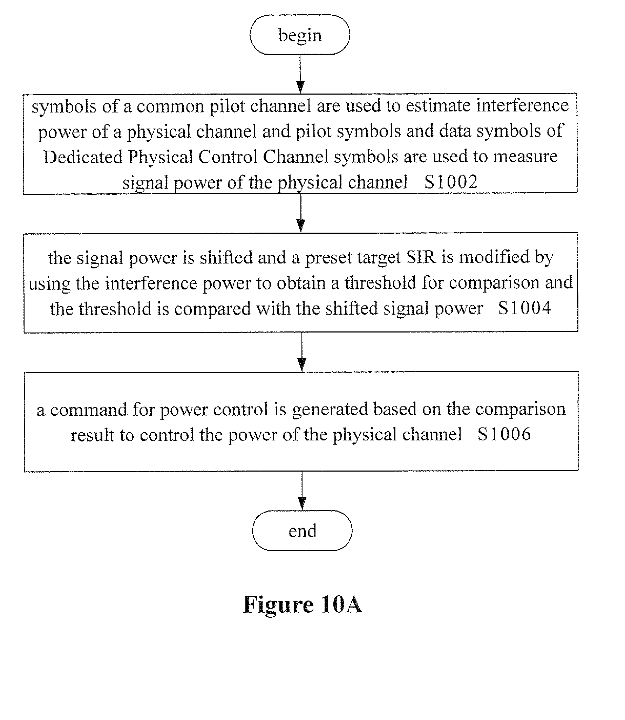

According to the said above, the method for power control according to the present invention comprises the following steps (as shown in figure 10A): Step 1002, symbols of a common pilot channel are used to estimate interference power of a physical channel and pilot symbols and data symbols of Dedicated Physical Control Channel symbols are used to measure signal power of the physical channel; Step 1004, the signal power is shifted and a preset target SIR is modified by using the interference power to obtain a threshold for comparison and the threshold is compared with the shifted signal power; and Step 1006, a command for power control is generated based on the comparison result to control the power of the physical channel.

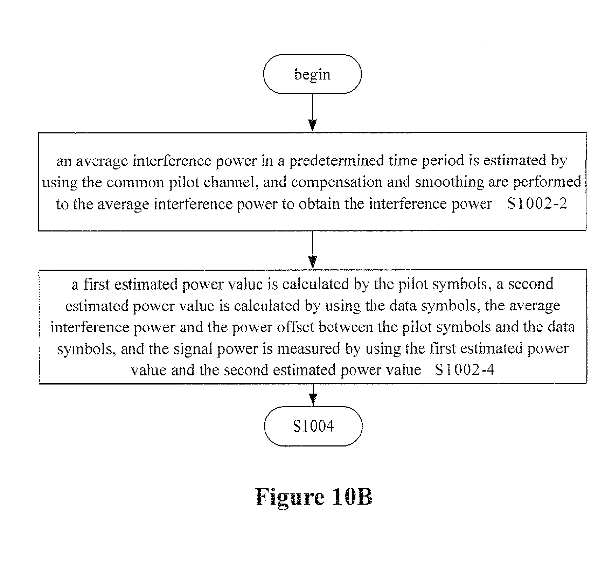

Wherein, the step 1002 (as shown in figure 10B) comprises: S1002-2**,** an average interference power in a predetermined time period is estimated by using the common pilot channel, and compensation and smoothing are performed to the average interference power to obtain the interference power; and S 1002-4, a first estimated power value is calculated by using the pilot symbols, a second estimated power value is calculated by using the data symbols, the average interference power and the power offset between the pilot symbols and the data symbols, and the signal power is measured by the first estimated power value and the second estimated power value.

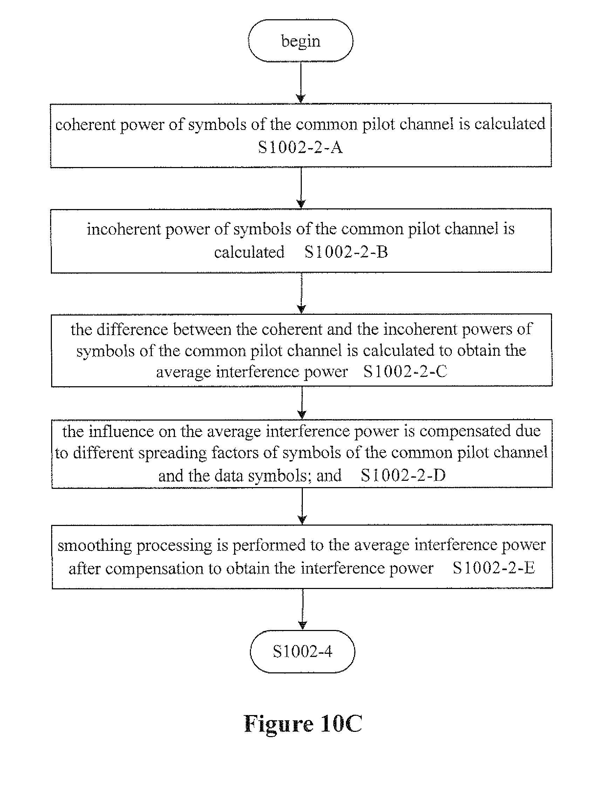

Wherein, the step 1002-2 (as shown in figure 10C) comprises: S1002-2-A, coherent power of symbols of the common pilot channel is calculated; S 1002-2-B, incoherent power of symbols of the common pilot channel is calculated; S1002-2-C, the difference between the coherent and the incoherent powers of symbols of the common pilot channel is calculated to obtain the average interference power; S 1002-2-D, the influence on the average interference power is compensated due to different spreading factors of symbols of the common pilot channel and the data symbols; and S1002-2-E, smoothing processing is performed to the average interference power after compensation to obtain the interference power.

Wherein, the method for calculating the coherent power of symbols of the common pilot channel is different from that for calculating the incoherent power of symbols of the common pilot channel.

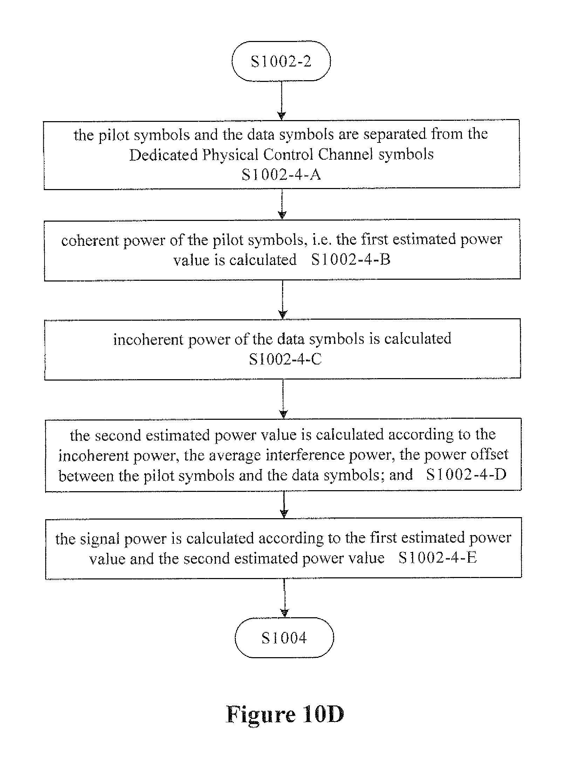

Wherein, the step 1002-4 (as shown in figure 10D) comprises: S1002-4-A, the pilot symbols and the data symbols are separated from the Dedicated Physical Control Channel symbols; S1002-4-B, coherent power of the pilot symbols, i.e. the first estimated power value is calculated; S1002-4-C, incoherent power of the data symbols is calculated; S 1002-4-D, the second estimated power value is calculated according to the incoherent power, the average interference power, the power offset between the pilot symbols and the data symbols; and S1002-4-E, the signal power is calculated according to the first estimated power value and the second estimated power value.

Wherein, the method for calculating the coherent power of the pilot symbols and that of symbols of the common pilot channel are the same, and the method for calculating the incoherent power of the data symbols and that of symbols of the common pilot channel are the same.

The present invention makes full use of symbols of Common Pilot Channel (CPICH) and symbols of Dedicated Physical Control Channel (DPCH) received by downlinks. Compared with the estimation with only a small amount of pilot symbols in the existing technologies, the interference power estimated by successive CPICH symbols in a time slot and by a certain compensation is more accurate. Likewise, the estimation to signal power in combination with data symbols and pilot symbols is also exacter than that only according to several discrete pilot symbols in DPCH. With the present invention, the precision of estimating SIR can be improved, which helps to maximize the system capacity. Moreover, the present invention takes the efficiency of hardware realization into account, wherein estimation of coherent power and that of incoherent power are combined with an error eliminating module by engineering methods, which facilitates hardware realization relative to technologies with hard decision of data symbols and will not cause errors because of wrong hard decision. Meanwhile, simple operation to carry out the present invention can also save hardware resources.

The present invention has been shown with reference to the above-described embodiments, and it is not to be limited by the above embodiments. It is understood by those skilled in the art various alterations and changes may be made within the spirit and scope of the invention. All modifications, substitute equivalents or improvements made therein are intended to be embraced in the claims of this invention.

The present invention will be detailed hereinafter in connection with the embodiments of the present invention and reference will be made to the drawings, if not conflict, the embodiments and the technical features of the embodiments can be combined with each other.

If not conflict, the embodiments and the technical features of the embodiments can be combined with each other.

Obviously, one skilled in the art shall understand that various modules and steps above can be realized with general computing devices and can be integrated into one single computing device or distributed within a network consisting of multiple computing devices, and alternatively, the various modules and steps above can be realized with the program codes executable by the computing devices, and thus these program codes can be stored in memory devices so as to be executed by the computing devices, or the various modules and steps above can be formed into individual integrated circuit modules, or a plurality of the modules or steps can be formed into a single integrated circuit module so as to be realized. Therefore, the present invention is not limited to any particular hardware or software combination. It should be understood that alterations of the embodiments are apparent to one skilled in the art and do not depart from the scope and spirit of the present invention.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of protection of the present invention.

## Claims

1. An apparatus for power control, **characterized in**, comprising :
a power measuring module for estimating interference power of a physical channel by using symbols of a common pilot channel and for measuring signal power of the physical channel by using pilot symbols and data symbols of Dedicated Physical Control Channel symbols;
a Signal to Interference Ratio comparing module for shifting the signal power and modifying a preset target SIR by using the interference power to obtain a threshold for comparison and comparing the threshold with the shifted signal power; and
a transmission power control command generating module for generating a command for power control based on the comparison result to control the power of the physical channel.

2. The apparatus for power control according to claim 1, **characterized in**, the power measuring module comprises
an interference power estimating module for estimating an average interference power in a predetermined time period by using symbols of the common pilot channel and performing compensation and smoothing to the average interference power to obtain the interference power; and
a signal power measuring module for calculating a first estimated power value by using the pilot symbols and a second estimated power value by using the data symbols, the average interference power and power offset between the pilot symbols and the data symbols and measuring the signal power by using the first estimated power value and the second estimated power value.

3. The apparatus for power control according to claim 2, **characterized in**, the interference power estimating module comprises
an interference estimating module for calculating an average interference power in a predetermined time period by using symbols of the common pilot channel and performing power compensation to the average interference power to compensate the influence on the average interference power made by the difference between spreading factors of symbols of the common pilot channel and those of the data symbols; and
a smoothing filter module for performing smoothing processing to the average interference power after power compensation to obtain the interference power.

4. The apparatus for power control according to claim 3, **characterized in**, the interference estimating module comprises
a first coherent power estimating module for calculating coherent power of symbols of the common pilot channel;
a first incoherent power estimating module for calculating incoherent power of symbols of the common pilot channel;
an adder for calculating the difference between the coherent power and the incoherent power of symbols of the common pilot channel to obtain the average interference power; and
a compensator for compensating the influence on the average interference power made by the difference between the spreading factors of symbols of the common pilot channel and those of the data symbols.

5. The apparatus for power control according to claim 4, **characterized in**, the algorithm of the first coherent power module is different from that of the first incoherent power module.

6. The apparatus for power control according to claim 3, **characterized in**, the signal power measuring module comprises
a symbol separating module for separating the pilot symbols and the data symbols from the Dedicated Physical Control Channel symbols and inputting the pilot symbols into a second coherent power estimating module and the data symbols to a second incoherent power estimating module;
the second coherent power estimating module for calculating coherent power of the pilot symbols, i.e. the first estimated power value;
the second incoherent power estimating module for calculating incoherent power of the data symbols;
an error eliminating module for calculating the second estimated power value according to the incoherent power, the average interference power and the power offset between the pilot symbols and the data symbols; and
a weighted average module for calculating the signal power according to the first estimated power value and the second estimated power value.

7. The apparatus for power control according to claim 6, **characterized in**, the algorithm of the second coherent power estimating module is the same with that of the first coherent power estimating module, and the second incoherent power estimating module is the same with that of the first incoherent power estimating module.

8. The apparatus for power control according to claim 1, **characterized in**, the Signal to Interference Ratio comparing module comprises
a shifting module for shifting the signal power;
a threshold modifying module for modifying the preset target SIR by using the interference power to obtain a threshold for comparison; and
a comparing module for comparing the threshold with the shifted signal power.

9. The apparatus for power control according to anyone of claims 1 to 8, **characterized in**, the target SIR is integral power of 2.

10. A method for power control, **characterized in**, comprising the following steps: Step 1002, symbols of a common pilot channel are used to estimate interference power of a physical channel and pilot symbols and data symbols of Dedicated Physical Control Channel symbols are used to measure signal power of the physical channel;
Step 1004, the signal power is shifted and a preset target SIR is modified by using the interference power to obtain a threshold for comparison and the threshold is compared with the shifted signal power; and
Step 1006, a command for power control is generated based on the comparison result to control the power of the physical channel.

11. The method for power control according to claim 10, **characterized in**, the step 1002 comprises:
S1002-2, an average interference power in a predetermined time period is estimated by using the common pilot channel, and compensation and smoothing are performed to the average interference power to obtain the interference power; and
S1002-4, a first estimated power value is calculated by the pilot symbols, a second estimated power value is calculated by using the data symbols, the average interference power and the power offset between the pilot symbols and the data symbols, and the signal power is measured by using the first estimated power value and the second estimated power value.

12. The method for power control according to claim 11, **characterized in**, the step 1002-2 comprises:
S1002-2-2, coherent power of symbols of the common pilot channel is calculated; S1002-2-4, incoherent power of symbols of the common pilot channel is calculated; S1002-2-6, the difference between the coherent and the incoherent powers of symbols of the common pilot channel is calculated to obtain the average interference power; S1002-2-8, the influence on the average interference power is compensated due to different spreading factors of symbols of the common pilot channel and the data symbols; and
S1002-2-10, smoothing processing is performed to the average interference power after compensation to obtain the interference power.

13. The method for power control according to claim 12, **characterized in**, the method for calculating the coherent power of symbols of the common pilot channel is different from that for calculating the incoherent power of symbols of the common pilot channel.

14. The method for power control according to claim 12, **characterized in**, the step 1002-4 comprises:
S1002-4-2, the pilot symbols and the data symbols are separated from the Dedicated Physical Control Channel symbols;
S1002-4-4, coherent power of the pilot symbols, i.e. the first estimated power value is calculated;
S 1002-4-6, incoherent power of the data symbols is calculated;
S1002-4-8, the second estimated power value is calculated according to the incoherent power, the average interference power, the power offset between the pilot symbols and the data symbols; and
S1002-4-10, the signal power is calculated according to the first estimated power value and the second estimated power value.

15. The method for power control according to claim 14, **characterized in**, the method for calculating the coherent power of the pilot symbols and that of symbols of the common pilot channel are the same, and the method for calculating the incoherent power of the data symbols and that of symbols of the common pilot channel are the same.

16. The method for power control according to claim 10, **characterized in**, the step 1002-4 comprises:
S 1002-4-2, the signal power is shifted;
S 1002-4-4, the preset target SIR is modified by using the interference power to obtain a threshold for comparison; and
S 1002-4-6, the threshold is compared with the shifted signal power.

17. The method for power control according to one of claims 10 to 16, **characterized in**, the target SIR is integral power of 2.
